(19) Europäisches Patentamt
European Patent Office
Office européen des brevets

(11) **EP 1 127 895 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.06.2015 Patentblatt 2015/24**

(45) Hinweis auf die Patenterteilung:
**10.05.2006 Patentblatt 2006/19**

(21) Anmeldenummer: **01103518.5**

(22) Anmeldetag: **16.02.2001**

(51) Int Cl.:
*C08B 11/20* (2006.01)    *C08J 3/12* (2006.01)
*C08L 1/00* (2006.01)

(54) **Verfahren zur Herstellung von pulverförmigen wasserlöslichen Cellulosederivaten**

Process for producing powdery water soluble cellulose derivatives

Procédé de préparation de dérivés de cellulose solubles dans l'eau sous forme poudreuse

(84) Benannte Vertragsstaaten:
**AT BE CH CY DE DK ES FI FR GB GR IE IT LI LU MC NL PT SE TR**

(30) Priorität: **28.02.2000 DE 10009409**

(43) Veröffentlichungstag der Anmeldung:
**29.08.2001 Patentblatt 2001/35**

(73) Patentinhaber: **Dow Global Technologies LLC Midland, MI 48674 (US)**

(72) Erfinder:
• **Schlesiger, Hartwig, Dr.**
  **29683 Fallingbostel (DE)**
• **Morning, Martin, Dr.**
  **29699 Bomlitz (DE)**
• **Weber, Gunter, Dr.**
  **29683 Fallingbostel (DE)**
• **Kiesewetter, René, Dr.**
  **29683 Fallingbostel (DE)**
• **Lelgemann, Rudolf, Dr.**
  **29699 Bomlitz (DE)**

(74) Vertreter: **f & e patent**
**Fleischer, Engels & Partner mbB, Patentanwälte**
**Braunsberger Feld 29**
**51429 Bergisch Gladbach (DE)**

(56) Entgegenhaltungen:
**EP-A- 0 370 447    EP-A- 0 835 881**
**EP-A- 0 835 882    WO-A1-98/31710**
**GB-A- 2 262 527**

Bemerkungen:
Die Akte enthält technische Angaben, die nach dem Eingang der Anmeldung eingereicht wurden und die nicht in dieser Patentschrift enthalten sind.

EP 1 127 895 B2

**Beschreibung**

Die Erfindung betrifft ein Verfahren zur Herstellung von pulverförmigen wasserlöslichen Cellulosederivaten, bevorzugt solchen mit thermischem Flockpunkt.

Nach der Reaktion und gegebenenfalls nach der Reinigung von bei der Reaktion entstandenen Nebenprodukten liegen Cellulosederivate insbesondere Celluloseether in bröckeliger, stückiger oder wattiger Form vor. In dieser Form beinhalten die Cellulosederivate noch die durch die Rohmaterialien vorgegebenen Strukturen. So zeigen Celluloseether häufig noch die faserartige Struktur der Ausgangscellulose. Diese Cellulosederivate sind so für ihren Einsatz, z.B. als in organischen und/oder wässrigen Medien lösliche Produkte, nicht geeignet.

Auch ist es notwendig, für die unterschiedlichen Einsatzgebiete bestimmte Korngrößenverteilungen, Schüttdichten, Trocknungsgrade und Viskositätsgrade einzustellen.

Grundsätzlich müssen also nahezu alle Cellulosederivate verdichtet, gemahlen und getrocknet werden, um sie einsatzfähig zu machen.

Zu den technisch bedeutenden Cellulosederivaten gehören insbesondere die Celluloseether. Ihre Herstellung, Eigenschaften und Anwendungen werden z.B. beschrieben in:

- Ullmann's Encyclopedia of Industrial Chemistry, 5th Edition (1986), Volume A5, Page 461- 488, VCH Verlagsgesellschaft, Weinheim.
- Methoden der organischen Chemie, 4. Auflage (1987), Band E20, Makromolekulare Stoffe, Teilband 3, Seite 2048-2076, Georg Thieme Verlag Stuttgart.

Die US-A 2 331 864 beschreibt ein Verfahren, bei dem ein wasserfeuchter Celluloseether bei Temperaturen > 50°C auf einen Wassergehalt von 72-88 Gew.-% eingestellt wird. Anschließend wird auf Temperaturen < 50°C gekühlt. Das so erhaltene Gel wird bei Temperaturen > 50°C getrocknet und das getrocknete Material gemahlen.

Die GB-A 804 306 beschreibt ein Verfahren zur Lösung kaltwasserlöslicher Celluloseether durch Kühlung einer heißen Mischung des faserigen Celluloseethers und Wasser (98 - 65 Gew.-%). Durch erneutes Heizen wird der Celluloseether gefällt, und getrocknet. Das getrocknete Produkt wird gemahlen.

Aus der DE-A 952 264 ist ein dreistufiges Verfahren zur Überführung feuchter, faseriger Methylcellulosen in Pulver von hoher Lösegeschwindigkeit bekannt. Hier wird das 50 bis 70 Gew.-% Wasser enthaltende Produkt zuerst zu einer plastischen Masse homogenisiert und auf 10 bis 20°C gekühlt wobei man sich einer gekühlten Schneckenpresse bedient; anschließend wird mit einer Hammermühle gemahlen und in einem Umlufttrockner getrocknet.

In der EP-A 0 049 815 (= US-A 4 415 124) wird ein zweistufiges Verfahren zur Herstellung von Mikropulvern aus Celluloseethern oder Cellulose beschrieben, wobei man die Produkte, die eine feinfaserige oder wollige Struktur aufweisen, zuerst in eine versprödete, verfestigte Form überführt und das so behandelte Material einer Mahlung unterwirft bis eine Korngrößenverteilung von mindestens 90 % unter 0,125 mm erreicht wird. In der Versprödungsstufe werden Schwing- oder KugelMühle, vorzugsweise in gekühlter Ausführung oder Pelletpressen und in der Mahlstufe Strahl, Stift- oder Pralltellermühlen eingesetzt.

DE-A 30 32 778 nennt ein zweistufiges Verfahren zur kontinuierlichen Homogenisierung von feuchten Celluloseethern, indem man den feuchten Celluloseether einer Schneid-, Prall- und Scherwirkung, erzeugt durch umlaufende Drehkörper mit verschiedenen Mantelprofilen, unterwirft, gegebenenfalls gleichzeitiger Pelletisierung der zerkleinerten Celluloseether unter Zugabe von Wasser und anschließender Trocknung der erhaltenen Pellets.

EP-A 0 370 447 beschreibt ein Verfahren zur produktschonenden Mahlung und gleichzeitigen Trocknung von feuchten Celluloseethern, wobei ein Celluloseether mit einer Anfangsfeuchte von 20 bis 70 Gew.-% mittels eines Transportgases befördert und gleichzeitig zu einer Schlagzerkleinerung reibzerkleinert und durch die Mahlenergie auf eine Restfeuchte von 1 bis 10 Gew.-% getrocknet wird.

In der EP-A 0 384 046 wird ein Verfahren zur Herstellung von Celluloseetherteilchen beschrieben, umfassend das Zerkleinern in einer Hochdrehzahl-Luflstrom-Rotationsprallmühle auf eine Teilchengröße von 0,4 bis 0,035 mm von Celluloseethern mit einer Viskosität größer 100 Pa*s, bestimmt als 2%-ige wässrige Lösung bei 20°C unter Verwendung eines Ubbelodhe Rohres.

Die WO 96/0074 nennt ein Verfahren zur Zerkleinerung von Celluloseethern, umfassend die Extrusion eines hydratisierten Celluloseethers durch Öffnungen mit einer Querschnittsfläche von 0,0075 mm$^2$ bis 1 mm$^2$ (7,5 x 10$^{-9}$ m$^2$ bis 1 x 10$^{-6}$ m$^2$) und Zerschneiden des so erzeugten Extrudats auf die erwünschte Länge.

Die EP-A 0 835 881 beschreibt ein Verfahren zur Herstellung von Methylcellulose-Pulvern mit spezieller Sieblinie durch Einstellung eines Methylhydroxyalkylcellulosegranulates auf einen Feuchtigkeitsgehalt von 30 bis 70 Gew.-% mit Wasser und anschließende Mahlung in einer Rotationsmühle wobei durch die eingetragene Mahlenergie gleichzeitig getrocknet wird. Es wird durch Klassierung eine spezielle Sieblinie eingestellt.

EP-A 0 835 882 offenbart eine Stebhorbmühle zur zerkleinerung von celluloseethern.

Die US-A 4 044 198 beschreibt ein Verfahren zum Kaltmahlen von Cellulosederivaten, bei dem man das Cellulosederivat mit einem Wassergehalt von 40 bis 150 Gew.-% Wasser, aus sein Trockengewicht bezogen, mit flüssigem Stickstoff kühlt und der Kaltmahlung unterwirft.

Die US-A 4 044 198 beschreibt ein Verfahren, bei dem Rohprodukte nach der Veretherung von Cellulose mit heißem Wasser nahezu salzfrei gewaschen werden und anschließend bei hohen Temperaturen durch Zentrifugation auf einen Wassergehalt von 50 Gew.-% bezogen auf die Gesamtmasse separiert werden und anschließend durch Einmischen von Wasser auf einen Wassergehalt von 60 bis 70 Gew.-% bezogen auf die Gesamtmasse eingestellt werden. Diese Gemische werden verdichtet, granuliert, getrocknet und gemahlen.

Die bekannten Verfahren nach dem Stand der Technik sind zum großen Teil mehrstufig mit Vortrockner oder Vorversprödung bzw. -verdichtung. Weiterhin ist bei allen Verfahren die chemische und/oder thermische Belastung der Makromoleküle, besonders bei der Verarbeitung von hochviskosen, hochsubstituierten Produkten, immer noch so hoch, dass bei der Mahlung die Makromoleküle im Sinne einer Kettenverkleinerung abgebaut werden, was sich insbesondere durch den mehr oder minder hohen Viskositätsabbau gegenüber den eingesetzten Produkten bemerkbar macht. Außerdem verhornen die Oberflächen der durch Vorversprödung- bzw. Vortrocknungsschritte behandelten Produkte. Des weiteren ist allen Verfahren der hohe Energieaufwand zur Vermahlung der Cellulosederivate nach Vortrocknung, -versprödung oder -verdichtung gemeinsam.

Es sind bereits Verfahren bekannt, die einige der oben zitierten Nachteile vermeiden, so beschreibt z.B. die GB-A 2 262 527 ein Verfahren zur Zerkleinerung von Cellulosederivaten durch Gelierung eines Celluloseethers mit einem Wassergehalt von 30 bis 80 Gew.-% durch Kühlung auf eine Temperatur von -10 bis 60°C und anschließende Mahltrocknung des Gels (bevorzugt in einer Prallmühle). Leider gibt die GB-A 2 262 527 keine Anweisung, wie mit hydroxyethylierten Mischethern der Methylcellulose (wie z.B. Methylhydroxyethylcellulose oder Methylhydroxypropylhydroxyethylcellulose) zu verfahren ist, um ein Produkt mit einem Schüttgewicht größer 300 g/l zu erhalten. Verfährt man mit einer Methylhydroxyethylcellulose wie in der GB 2 262 527 für Methylhydroxypropylcellulose beschrieben wird, so werden wattige Produkte mit einem Schüttgewicht < 250 g/l erhalten. Auch ist das Ergebnis der Mahltrocknung von Methylcellulose (Beispiel 3) mit einem Schüttgewicht von 270 g/l nicht zufriedenstellend.

Die WO 98/31710 beschreibt ein Verfahren zur Herstellung von feinteiligen Polysaccharidderivaten durch Vergelung bzw. Lösung eines Celluloseethers mit 35 bis 99 Gew.-% (bevorzugt 60 bis 80 Gew.-%) Wasser bezogen auf das Gesamtgewicht und anschließende Mahltrocknung, wobei zum Transport und zur Trocknung des Mahlgutes überhitzter Wasserdampf eingesetzt wird.

So werden z.B. Gele von MHEC durch Kühlung einer heißen Suspension hergestellt, die einen Trockensubstanzgehalt von 20 Gew.-% bezogen auf die Gesamtmasse besitzen. Im nachfolgenden Schritt werden diese Gele dann zu Pulvern verarbeitet. Die Kühlung heißer Suspensionen, wie in der WO 98/31710 beschrieben, ist leider technisch sehr aufwendig und es wird keine Anweisung für ein kontinuierliches Verfahren gegeben.

Dieses Verfahren vermeidet ebenfalls viele der oben zitierten Nachteile. Jedoch ist die Zerkleinerung bei diesem Mahltrocknungsverfahren noch nicht ausreichend, so passieren nur 57 Gew.-% der zerkleinerten Methylhydroxyethylcellulose ein 0,063 mm Sieb (Beispiel 3). Erst durch eine Klassierung über ein Luftstrahlsieb wird die gewünschte Feinheit erreicht. Des weiteren bringt der Einsatz von reinem Wasserdampf als Transport- und Wärmeträgergas Nachteile bezüglich der Betriebssicherheit der Mahlanlage mit sich, da sich rasch durch Kondensation von Wasser zusammen mit dem feinteiligen Polysaccharidderivat Filme und Verkrustungen bilden. Hierdurch wird der Aufwand für Instandhaltungsmaßnahmen erhöht. Feinteilige Produkte, die zu mehr als 95 Gew.-% ein 0,1 mm Sieb passieren oder gar zu mehr als 90 Gew.-% ein 0,063 mm Sieb passieren, werden gemäß dieser Anmeldung nur durch Dispergieren von gelösten Polysaccharidderivaten in einem nichtlösendem Umgebungsmedium und nachfolgende Zerkleinerungs- Filtrations- und Trocknungsschritte erhalten (Beispiel 1 und 2).

Aufgabe der vorliegenden Erfindung ist es deshalb, ein Verfahren zur Herstellung pulverförmiger wasserlöslicher Cellulosederivate zu entwickeln, bei dem

- gezielt Mahlungsgrade eingestellt werden können,
- Sieblinien mit einem Anteil >65 Gew.% < 0,063 mm eingestellt werden können,
- keine Verhornung der Produkte auftritt,
- die Schüttdichte der Produkte eingestellt werden kann,
- kein oder nur ein auf das Minimum reduzierter Viskositätsabbau gegenüber den Ausgangsprodukten erfolgt, und
- ein gut rieselfähiges Produkt erhalten wird:

Diese Aufgabe konnte durch das Verfahren des Anspruchs 1 gelöst werden.

Es konnte gefunden werden, dass die mit diesem Verfahren hergestellten Cellulosederivate eine hohe Schüttdichte bei guter Rieselfähigkeit besitzen und der Feinstaubanteil im Produkt sehr gering ist. Es findet kein oder nur ein minimaler Viskositätsabbau gegenüber den Ausgangsprodukten statt.

Die Cellulosederivate, die in diesem Verfahren zur Anwendung kommen, sind löslich oder zumindest in quellbar Wasser.

Bei dem Cellulosederivaten handelt es sich um Methylhydroxypropylhydroxyethylcellulose (MHPHEC) oder Methylhydroxyethylcellulose (MHEC).

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben. Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben. Die Bestimmung der Seitengruppen erfolgt anhand der Zeisel-Methode (Literatur: G. Bartelmus und R. Ketterer, Z. Anal. Chem. 286 (1977) 161-190).

Am meisten bevorzugt sind Methyldydroxyethylcellulosen mit einem DS (M) von 1 bis 2,6 und einem MS (HE) von 0,05 bis 0,9, insbesondere solche mit einem DS (M) von 1,3 bis 1,9 und einem MS (HE) von 0,15 bis 0,55 und Methylhydroxypropylhydroxyethylcellulosen mit einem DS (M) von 1 bis 2,6 und einem MS (HP) von 0,05 bis 1,2 und einem MS (HE) von 0,05 bis 0,9, insbesondere solche mit einem DS (M) von 1,3 bis 1,9 und einem MS (HP) von 0,05 bis 0,6 und einem MS (HE) von 0,15 bis 0,55.

Die Wasserlöslichkeit der Cellulosederivate die einen thermischen Flockpunkt in Wasser aufweisen ist stark temperaturabhängig. Unterhalb des thermischen Flockpunktes bilden diese Cellulosederivate Lösungen bzw. Gele. Der thermische Flockpunkt in Wasser beschreibt die Temperatur, bei der es zur Hitzekoagulation des Cellulosederivates kommt.

Durch den Quell- oder Lösevorgang werden übergeordnete Strukturen, wie sie aus dem Celluloseausgangsmaterial resultieren, aufgehoben. So geht bei Celluloseethern die faserartige Struktur nahezu vollständig verloren, wobei nur der Anteil des Celluloseethers gequollen oder gelöst wird, dessen Derivatisierung ausreichend ist. Die so erhaltenen gequollenen oder gelösten Cellulosederivate enthalten zu weniger als 25 bis 50 Gew.-% bezogen auf den Feststoffanteil lösliches oder quellbares Material im Ausgangszustand.

Die resultierenden geqollenen oder gelösten Cellulosederivate stellen viskoelastische Systeme dar, deren Eigenschaftsbild je nach Lösungsmittelmenge und Cellulosederivat einer unter Eigengewicht fließfähigen Lösung, einem flexiblem Gel oder einem weichen aber spröden Festkörper entspricht.

Der Anteil an Wasser wird so gewählt, dass eine ausreichende Quellung bzw. Lösung erreicht wird, um die übergeordneten Strukturen aufzuheben und das gewünschte Schüttgewicht einzustellen. Dieser Anteil beträgt 65 bis 78 Gew.-%, am meisten bevorzugt 68 bis 76 Gew.-% Wasser bezogen auf das Gesamtgewicht. Überraschenderweise wurde gefunden, dass zur Erreichung eines gewünschten Schüttgewichtes des gemahlenen Produktes ein minimaler spezifischer Wassergehalt notwendig ist. Dieser Wert variiert unter anderem mit der Art der Substituenten, der Veretherungshöhe und dem Molekulargewicht des Cellulosederivates. Im allgemeinen erfordert eine höhere Veretherung einen geringeren Wassergehalt. Ebenso erfordert im allgemeinen ein geringeres Molekulargewicht einen geringeren Wassergehalt. Es ist zu empfehlen, den jeweils für das zu verarbeitende Cellulosederivat optimalen Wassergehalt durch Versuche zu ermitteln.

In einer Ausführung des Verfahrens werden Celluloseether mit thermischem Flockpunkt in Wasser, durch Zugabe kalten Wassers, gegebenenfalls unter Zuhilfenahme zusätzlichen Wassers, bis auf Temperaturen unterhalb des Flockpunktes gequollen oder in Lösung gebracht, so dass übergeordnete Strukturen, z.B. Faserstrukturen, weitgehend verloren gehen. Hinbei werden wasserfeuchter Filterkuchen der Methylhydroxyethylcellulose oder Methylhydroxypropylhydroxyethylcellulose mit einem Wasseranteil von 40 bis 65 Gew.-% eingesetzt, welche mit zusätzlichem Wasser versetzt und gekühlt werden. Bevorzugt wird kaltes Wasser eingemischt und anschließend homogenisiert. So wird z.B. in einem Zweiwellenkneter kontinuierlich Wasser eingemischt und das Gemisch anschließend durch Scheren und Kneten homogenisiert. Es eignen sich sowohl gleichläufige als auch gegenläufige Maschinen, wobei die gleichläufigen Maschinen aufgrund der axialen Offenheit bevorzugt werden. Die Schneckenkonfiguration muß den geforderten Bedingungen so angepaßt werden, daß zum einen eine ausreichende Knetwirkung erzielt wird, zum anderen die Scherbelastung so dosiert wird, daß keine unzulässige Beanspruchung des Materials auftritt, die ggf. zur Reduktion der Molekülketten-Länge führen kann. Durch ein vergleichsweise geringeres Schergefälle zeichnen sich sog. Doppelmuldenknetmaschinen mit zwei horizontal angeordneten Knetschaufeln aus, die tief ineinandergreifen und sich - wie bei den Doppelschnecken-Knetern - gegenseitig abstreifen [Fa. IKA, Fa. List]. Durch unterschiedliche Drehzahlen der Wellen wird die benötigte Friktion im Cellulosederivat-Knetgut und damit eine gute Dispergierung und Homogenisierung der Methylcellulose mit Wasser erzeugt.

Zu den zur Homogenisierung geeigneten einwelligen, kontinuierlichen Knetern zählen sogenannte Reflectoren®, das sind Hochleistung-Mischer in Modulbauweise, die aus einem mehrteiligen, heiz- und kühlbaren Mischzylinder und einem einseitig gelagerten Flügel-Mischwerk bestehen [Fa. Lipp]. Ebenso geeignet sind auch sog. Stiftzylinder-Extruder oder Stiftconvert®-Extruder [Fa. Berstorff], wie sie zur Herstellung von Kautschuk- und Gummimischungen eingesetzt werden. Die ins Gehäuse eingelassenen Stifte dienen als Widerlager, um das Mitdrehen des Knetgutes mit der Welle zu verhindern. Einwellige Schneckenmaschinen ohne Förderbarrieren sind für die vorgenannte Aufgabe nicht geeignet.

Zur genauen Einstellung der Verweilzeit und/oder zur Steuerung paralleler diffusionsbestimmter Reaktionen sind Batch-Aggregate den kontinuierlichen Apparaten vorzuziehen. Knetmischer mit sog. doppelschaufligen Sigma-Rührern [Fa. Fima] in horizontaler Einbaulage eignen sich für die beschriebene Aufgabe in besonderem Maße. Die Schaufeln arbeiten mit unterschiedlichen Geschwindigkeiten und in der Drehrichtung umkehrbar. Zur Entleerung des Kneters ist im Sattelbereich eine Austragsschnecke angeordnet. Auch geeignet ist ein Rührbehälter mit vertikal angeordneter Mischer-Welle, wenn zur Verhinderung des Mitdrehens der Knetmasse mit der Rührwelle geeignete Stromstörer an der Behälterwand angebracht sind und dadurch eine intensive Mischwirkung auf das Knetgut übertragen wird [Fa. Bayer]. Die Rührarme sind so angeordnet, daß sie neben der Durchmischung des gesamten Behälterinhalts auch eine Preßwirkung nach unten bewirken, so daß die in den Behälterboden eingelassene Austragsschnecke stets mit Material gefüttert wird. Ebenso geeignet zur batchweisen Homogenisierung von Cellulosederivaten mit Wasser sind doppelwandige Mischbehälter mit Planetenrührwerk und Inline-Homogenisator. Das Planetenrührwerk sorgt für eine intensive Vermischung des Behälterinhalts und garantiert ein nahezu belagfreies Abreinigen der temperierbaren Behälterinnenwand. Ein im Bypass geschaltetes Rotor-/Stator-System sorgt für eine zusätzliche Homogenisierung.

Das gequollene oder gelöste Cellulosederivat wird dann in einer sieblosen Hochdrehzahl-Prallmühle derart in den Festkörperzustand überführt wird, dass das Wasser, das sich im gequollenen oder gelösten Cellulosederivat befindet, in die Dampfphase überführt wird und andererseits das gelöste oder gequollene Cellulosederivat durch Phasenübergang in den Festkörper überführt wird, wobei bei diesen Prozessen die Formveränderung des Cellulosederivates unter Überlagerung von äußeren Kräften (Prall, Scherung) geschieht.

Die Zuführung des Cellulosederivates in die Mahltrocknungsvorrichtung kann in Abhängigkeit der Konsistenz des zuzuführenden Materials mittels an sich bekannten Zuführorganen gemäß dem Stand der Technik geschehen. Eine Vorzerkleinerung des zuzuführenden Stranges in Einzelstränge, welche gegebenenfalls zusätzlich in Querrichtung zerteilt werden, kann erfolgen, wobei die Einzelstränge Querschnittsflächen von größer 1 mm$^2$ aufweisen. Vorteilhafterweise wird das Aufgabegut durch ein Passiersieb gedrückt und dabei zu Einzelsträngen geformt. In ähnlicher Weise können ein- oder zweiwellige Schneckenmaschinen mit Lochscheibenvorsatz (Fleischwolf) verwendet werden. Mit Hilfe eines Schneidwerkes können die Endlosstränge gegebenenfalls nach der Lochscheibe in kleinere Abschnitte geschnitten werden. Mit Schneckendosierern ist die Einspeisung der extrudierten Stränge direkt auf die Mahlzone möglich.

Die Mahltrocknung wird in einer sieblosen Hochdrehzahl-Prallmühle durchgeführt, in der das Cellulosederivat einer Prall- und/oder Scherbeanspruchung unterworfen wird. Derartige Mühlen sind bekannt (z.B. aus US-A 4 747 550, DE-A 38 11 910 oder EP-A 0 775 526).

Als Wärmeträger- und Transportgas zur Mahltrocknung wird ein Inertgas, Luft, ein Gemisch aus Wasserdampf und einem Inertgas oder Luft oder Wasserdampf eingesetzt, wobei der Wasserdampfanteil bevorzugt dadurch aufgebaut wird, dass das als Lösungsmittel für das Cellulosederivat eingesetzte Wasser verdampft wird. Als Inertgas können beliebige Gase oder Gasgemische mit einem Taupunkt < RT eingesetzt werden. Bevorzugt werden Stickstoff, Kohlendioxid, Luft, Verbrennungsgase oder Gemische dieser Gase eingesetzt. Die Temperatur des eingespeisten Inertgases bzw. der Luft kann beliebig gewählt werden, bevorzugt wird die Temperatur im Bereich 0 - 300°C liegen, insbesondere nimmt man Inertgas bzw. Luft im Temperaturbereich 5 - 50°C, bevorzugt von Umgebungstemperatur. Das Gas oder Gasgemisch kann durch Wärmetauscher vorgeheizt werden oder, wie im Fall der Verbrennungsgase, bereits heiß vorliegen. Bei einer Führung des Mahlgases im Kreis kann das Inertgas bzw. die Luft kann an beliebigen Stellen der Mahlanlage zugegeben werden. So kann z.B. die Rückführung von Grobkorn zur Mahlzone pneumatisch geschehen und der Förderstrom so gewählt werden, das die gewünschte Menge Inertgas bzw. Luft eingetragen wird. Die Zugabe von Inertgas oder Luft kann z.B. auf der Saugseite des Ventilators oder gemeinsam mit dem Mahlgut geschehen. Die Zugabe des Inertgases bzw. der Luft kann bevorzugt auch an verschiedenen Stellen der Mahlanlage gleichzeitig geschehen. Die Zugabe von Inertgas oder Luft erfolgt dann bevorzugt in einem Verhältnis zum eingetragen verdampften Wasser von 1:99 Gew.-Teile bis 60:40 Gew.-Teile bevorzugt in einem Verhältnis von 3:97 Gew.-Teile bis 40:60 Gew.-Teile, besonders bevorzugt in einem Verhältnis von 5:95 Gew.-Teile bis 30:70 Gew.-Teile. Das eingetragene Wasser wird hierbei durch das gelöste oder gequollene Cellulosederivat eingetragen und im Mahltrocknungsvorgang verdampft oder direkt in Form von Wasser oder Wasserdampf in die Mühle eingespeist. Die verdampfte Menge Wasser berechnet sich wie folgt:

$$\text{Menge Wasserdampf [kg/h]} = \text{eingespeiste Menge Wasser oder Wasserdampf [kg/h]}$$
$$+ \text{eingetragene Menge Gel [kg/h]} * \text{Gew.-\% Wasser im Gel / 100 Gew.-\%} - \text{Durchsatz MC-Pulver [kg/h]} * \text{Gew.-\% Feuchte / 100 Gew.-\%}$$

Da der letzte Term im allgemeinen sehr klein ist im Vergleich zum ersten und zweiten Term, kann die Menge Wasserdampf näherungsweise berechnet werden als:

$$\text{Menge Wasserdampf [kg/h]} = \text{eingespeiste Menge Wasser oder Wasserdampf [kg/]} + \text{eingetragene Menge Gel [kg/h]} * \text{Gew.-\% Wasser im Gel} / 100\text{Gew.\%}$$

Wird kein zusätzliches Wasser oder Wasserdampf in die Mühle eingespeist, so berechnet sich die Menge Wasserdampf näherungsweise als:

$$\text{Menge Wasserdampf [kg/h]} = \text{eingetragene Menge Gel [kg/h]} * \text{Gew.-\% Wasser im Gel} / 100 \text{ Gew.-\%}$$

Durch die relativ zur eingeschleusten Wasser und Inertgas- bzw. Luft-Menge hohe Gasumlaufmenge im Kreislauf wird die Durchmischung des Wasserdampfes mit dem Inertgas bzw. der Luft gewährleistet.

Das gelöste oder gequollene Cellulosederivat wird durch vielfache Prall- und/oder Scherbeanspruchung zwischen rotierenden und feststehenden oder gegenläufig rotierenden Mahlwerkzeugen und/oder durch Stoß mehrerer Partikel zerkleinert. Gleichzeitig wird das im Feststoff befindliche Lösungsmittel verdampft. Die dazu erforderliche thermische Energie wird nur zum Teil durch das Wärmeträgergas eingebracht. Die durch Reibung in Wärme umgesetzte elektrische Energie des Mühlenantriebes trägt gleichzeitig zur Trocknung bei.

Die feinteiligen Feststoffpartikel werden vom Gasstrom getrennt, z.B. in einem der Mahltrocknungsvorrichtung nachgeschaltetem Abscheider. Dieser kann ein Massenkraftabscheider wie z.B. ein Zyklon oder auch ein Filterabscheider sein. Je nach Mühlenbauart kann intern eine Klassierung durch Sichtung erfolgen. Ein gegebenenfalls vorhandener Grießeanteil wird aufgrund der die Schleppkräfte des Transportgases überwiegenden Fliehkraft vom Feingut getrennt. Das Feingut wird als Fertiggut aus der Mahlkammer mit dem Transportgas ausgetragen. Die Grieße werden in einem internen oder externen Grießerücklauf wieder zur Mahlzone zurückgeführt. Die Mahltrocknung wird so betrieben, dass eine weitere Klassierstufe durch Sichtung oder Siebung nicht notwendig ist. Jedoch wird vorteilhaft über eine Schutzsiebung das Grobkorn separiert. Hierbei werden Siebe mit einer Maschenweite von 0,125 mm bis 1 mm eingesetzt. Der separierte Grobkornanteil beträgt < 15 Gew.-%, bevorzugt < 7 Gew.-%, besonders bevorzugt < 3 Gew.-% bezogen auf die Gesamtmasse des mahlgetrockneten Cellulosederivates. Dieser abgetrennte Grobanteil kann gegebenenfalls zur Mühle zurückgeführt werden oder dem Aufgabegut untergemischt werden.

Das Wärmeträger- und Transportgas (Mahlgas) kann im Kreis geführt werden, entsprechend wird dann der überschüssige Anteil als Teilstrom ausgeschleust. Die Gasumlaufmenge [kg/h] im Kreislauf steht zur eingetragenen Wasser [kg/h] und Inertgasmenge bzw. Luftmenge [kg/h] bevorzugt im Verhältnis 5 bis 15, insbesondere im Verhältnis 8 bis 12. Vor die Mahltrocknungsvorrichtung wird ein Wärmetauscher geschaltet, der den durch die Verdampfung des Wassers, dass das Cellulosederivat enthält, und Wärmeverlust abgekühlte Mahlgas wieder aufheizt.

Der Wasserdampfanteil des ausgeschleusten Teilstroms des Mahlgases kann, gegebenenfalls nach einer Heißgasfiltration, unter Wärmerückgewinnung kondensiert werden.

Die feinteiligen Feststoffpartikel können gegebenenfalls in Trocknungsvorrichtungen gemäß dem Stand der Technik auf die gewünschte Feuchte getrocknet werden. Die Trocknung erfolgt zweckmäßigerweise mit konvektiven Trocknern, vorzugsweise mit Stromtrocknern, Ringtrocknern oder ähnlichen Aggregaten. Bevorzugt wird die Mahltrocknung so betrieben, dass ein nachträglicher Trocknungsschritt nicht notwendig ist.

Für eine Modifizierung des Eigenschaftsprofils des Endproduktes können gegebenenfalls vor, während oder nach einem oder mehreren der Schritte des Verfahrens - Quellung oder Lösung des Cellulosederivates in Wasser, Mahltrocknung des gequollenen oder gelösten Cellulosederivates, Trocknung des feinteiligen Cellulosederivates - Modifikatoren, Additive und/oder Wirkstoffe zugegeben werden. Unter Modifikatoren sollen Substanzen verstanden werden, die chemisch Einfluss auf das Polysaccharidderivat nehmen. Typische Modifikatoren sind Oxidationsmittel, z.B. Wasserstoffperoxid, Ozon, Hypohalogenide, Perborate und Percarbonate sowie Vernetzungsmittel, z.B. Dialdehyde wie Glyoxal oder Glutarsäuredialdehyd, polyfunktionelle Epoxide, polyfunktionelle Isocyanate, organische Säuren, Mineralsäuren, organische und anorganische Salze, jedoch nicht auf diese beschränkt.

Unter Additiven sollen Substanzen verstanden werden, die keinen chemischen Einfluss auf das Polysaccharidderivat nehmen. Typische Additive sind Konservierungsstoffe, Dispergiermittel, Entschäumer, Luftporenbildner, Pigmente, nichtionische, anionische und kationische synthetische und natürliche Polymere und deren Derivate, z.B. Stärkeether wie Hydroxyethyl oder Hydroxypropylstärke, organische und anorganische Salze, jedoch nicht auf diese beschränkt.

Unter Wirkstoffen sollen Substanzen verstanden werden, die keinen chemischen Einfluss auf das Cellulosederivat nehmen und das Cellulosederivat als Bindemittel nutzen. Typische Wirkstoffe sind Pflanzenschutzmittel und Pharmawirkstoffe, jedoch nicht auf diese beschränkt.

Die Cellulosederivate dieser Erfindung können in einer Vielzahl von Anwendungen eingesetzt werden. Sie werden angewandt als wasser- oder lösungsmittellösliche Verdicker oder Bindemitteln, Farben, Pharmazeutika, Kosmetika, Lebensmitteln. Sie können eingesetzt werden als Beschichtungs- oder als Bindemittel, z.B. in Pharmazeutika. Eine weitere Anwendung ist als Schutzkolloid z.B. in der Suspensionspolymerisation.

Bei den Produkten dieses Verfahren handelt es sich um feinteilige Cellulosederivate, wobei die aus den Ausgangsmaterialien stammenden Überstrukturen, z.B. Faserstrukturen weitgehend aufgehoben sind.

Die nach dem erfindungsgemäßen Verfahren hergestellten feinteiligen Cellulosederivate werden gegebenenfalls mittels Laserbeugungsverfahren zur Partikelgrößenbestimmung (Stand der Technik, z.B. Sympatec HELOS (H1007)&RODOS) offline analysiert. Die Auswertung des Beugungsmusters geschieht hierbei zunächst unter der Annahme kugelförmiger Partikel und konstanter wahrer Dichten über das gesamte Partikelgrößenspektrum. Hierbei werden überraschenderweise signifikante Unterschiede im Vergleich zu Produkten, die gemäß Verfahren nach dem Stand der Technik hergestellt wurden, gefunden. So werden bei dem erfindungsgemäßen Verfahren Produkte mit weniger als 5 Gew.-%, bevorzugt weniger als 2 Gew.-% bezogen auf das Gesamtgewicht der Partikel mit einer Partikelgröße kleiner 15 um gefunden. Es werden weniger als 2 Gew.-%, bevorzugt weniger als 1 Gew.-% bezogen auf das Gesamtgewicht der Partikel kleiner 10 um gefunden und weniger als 1 Gew.-%, bevorzugt weniger als 0,5 Gew.-%, am meisten bevorzugt weniger 0,1 Gew.-% bezogen auf das Gesamtgewicht der Partikel kleiner 5 um gefunden. Hieraus resultiert im Vergleich zu Produkten gemäß dem Stand der Technik ein deutlich verringerter Feinststaubanteil und eine engere Partikelgrößenverteilung.

Durch Variation der Drehzahl des Rotors und somit der Umfangsgeschwindigkeit des Rotors der Hochdrehzahl-Gasstrom-Rotationsprallmühle kann gezielt der Grad der Zerkleinerung und somit die Sieblinie eingestellt werden. Zur Steuerung der Mühle wird daher vorteilhaft ein Teil des Produktstromes hinter dem Produktabscheider (Zyklon, Filterabscheider) ausgeschleust und kontinuierlich mittels eines Verfahrens zur Partikelgrößenbestimmung analysiert. Alternativ kann ein Probenahme- und Meßsystem direkt in eine Förderleitung integriert werden. Bevorzugt werden hierfür Laserbeugungsverfahren eingesetzt.

Durch diese Vorgehensweise lassen sich enge Bereiche bezüglich der gewünschten Sieblinien einhalten. So ist es möglich gezielt Mahlgrade einzustellen, wobei bezüglich des kumulierten Siebdurchganges durch ein 0,063 mm Sieb eine Genauigkeit von +/- 5 Gew.-% erreicht wird. Nachfolgend sind die Sieblinien gelistet, die für die Zielgrößen 40, 50, 60, 70, 80, 90 Gew.-% < 0,063 mm für Produkte mit Schüttgewichten im Bereich 300 g/l bis 500 g/l erreicht werden. Breitere Partikelgrößenverteilungen lassen sich durch Abmischen von Pulvern unterschiedlicher Sieblinien erhalten.

Die Analysensiebe entsprechen der DIN ISO 3310. Die unten angegebenen lichten Maschenweiten entsprechen dem USA-Standard ASTM E11-61 wie folgt:

|  | ASTM E 11-61 |
|---|---|
| 0,25 mm | 60 mesh |
| 0,125 mm | 120 mesh |
| 0,063 mm | 230 mesh |

**Sieblinie A**

| | Gew.-% kumulierter Siebdurchgang |
|---|---|
| < 0,25 mm | 98,5-100 |
| < 0,2 mm | 95-100 |
| < 0,16 mm | 89-98 |
| < 0,125 mm | 79 - 92 |
| < 0,1 mm | 65 - 80 |
| < 0,063 mm | 35 - 45 |

**Sieblinie B**

| | Gew.-% kumulierter Siebdurchgang |
|---|---|
| < 0,25 mm | 99 -100 |

(fortgesetzt)

|  | Gew.-% kumulierter Siebdurchgang |
| --- | --- |
| < 0,2 mm | 98-100 |
| <0,16mm | 93-100 |
| < 0,125 mm | 85- 94,5 |
| <0,1 mm | 75-88 |
| < 0,063 mm | 45- 55 |

Sieblinie C

|  | Gew.-% kumulierter Siebdurchgang |
| --- | --- |
| < 0,25 mm | 99 - 100 |
| < 0,2 mm | 98,5 - 100 |
| <0,16mm | 95,5-100 |
| < 0,125 mm | 89 - 96,5 |
| <0,1 mm | 81-91,5 |
| < 0,063 mm | 55 - 65 |

Sieblinie D

|  | Gew.-% kumulierter Siebdurchgang |
| --- | --- |
| < 0,25 mm | 99,5-100 |
| < 0,2 mm | 99,0 - 100 |
| < 0,16 mm | 97,0 - 100 |
| < 0,125 mm | 93 - 98 |
| < 0,1 mm | 86 - 94,5 |
| < 0,063 mm | 65 - 75 |

Sieblinie E

|  | Gew.-% kumulierter Siebdurchgang |
| --- | --- |
| < 0,25 mm | 99,9 - 100 |
| < 0,2 mm | 99,5 - 100 |
| < 0,16 mm | 97,5 - 100 |
| <0,125 mm | 95,5 - 99,5 |
| < 0,1 mm | 91-97 |
| < 0,063 mm | 75 - 85 |

Sieblinie F

|  | Gew.-% kumulierter Siebdurchgang |
| --- | --- |
| < 0,25 mm | 99,9 - 100 |
| < 0,2 mm | 99, 5 - 100 |
| <0,16 mm | 98,5 -100 |
| < 0,125 mm | 96,5 - 99,9 |
| < 0,1 mm | 94 - 99,5 |
| < 0,063 mm | 85 - 95 |

Die Schüttdichte der feinteiligen Cellulosederivate lässt sich bei dem erfindungsgemäßen Verfahren durch den Quell- bzw. Lösungsschritt von größer/gleich 0,15 kg/l bis größer/gleich 0,5 kg/l einstellen. Bevorzugt werden Produkte mit einem Schüttgewicht größer/gleich 0,3 kg/l und kleiner/gleich 0,5 kg/l erzeugt.

**Beispiele:**

**Beispiel Gelherstellung**

In einem Rührbehälter mit vertikal angeordneter Mischer-Welle, an der die Mischwerkzeuge so angeordnet sind, dass der gesamte Mischraum erfasst wird, wurde wasserfeuchter Filterkuchen einer Methylhydroxyethylcellulose mit einem Wassergehalt von 55 Gew.-% bezogen auf das Gesamtgewicht (aus Methylhydroxyethylcellulose mit einem DS (Methyl) = 1,51 und einem MS (Hydroxyethyl) = 0,28) kontinuierlich mit Wasser vermengt, so dass ein Methylhydroxyethylcellulosegel mit einem Feststoffgehalt von 25 % bezogen auf das Gesamtgewicht hergestellt wurde. Um das Mitdrehen des Materials zu verhindern, sind Stromstörer an der Behälterwand angeordnet. Die Rührflügel an der Mischerwelle sind so angeordnet, dass sie neben der Durchmischung auch eine Presswirkung nach unten bewirken, so dass die in den Behälterboden eingelassene Austragsschnecke stetig mit Material gefüttert wird. Das Gel wurde aufgefangen und anschließend zu feinteiligen Methylhydroxyethylcelluloseprodukten weiterverarbeitet.

**Beispiele: Mahltrocknung**

Die Mahlanlage besteht aus einer sieblosen Hochdrehzahl-Gastrom-Rotationsmühle (Typ Ultra Rotor II, Altenburger Maschinen Jäckering GmbH) mit vertikal angeordneter Antriebswelle und sieben Mahlbahnen von 0,5 m Durchmesser mit jeweils 16 Schlagplatten, die gegen eine profilierte Gegenmahlbahn arbeiten. Die Rotorumfangsgeschwindigkeit wird durch die Drehzahl des Rotors bestimmt und berechnet sich entsprechend U=π*n*d mit n=Drehzahl des Rotors und d= 0,5 m. Die Drehzahl des Rotors wird über die Mühlensteuerung geregelt. Der Mühle nachgeschaltet ist ein Zyklon mit 0,6 m Durchmesser, wo der Hauptanteil des feingemahlenen Produktes abgeschieden wird. Der Gasstrom wird anschließend in zwei parallel geschaltete Schlauchfilter mit jeweils 12 m$^2$ von Reststaub befreit. Reingasseitig ist Radial-Ventilator ein angeordnet, der den staubfreien Gasstrom in einen Wärmetauscher leitet, wo das Mahlgas auf die geforderte Trocknungstemperatur überhitzt wird.

Mittels einer Dosierschnecke wird das Aufgabegut (wasserfeuchtes Cellulosederivat) in die Mühle auf Höhe der ersten und zweiten Mahlbahn dosiert. Durch eine der Dosierschnecke vorgeschaltete Lochplatte wird das Aufgabegut in einzelne Stränge von ca. 10 mm Durchmesser zerteilt. Zusätzlich wird an verschiedenen Stellen (Ventilator, Prallmühle, Zyklon) der Anlage Stickstoff zudosiert. Insgesamt beträgt die eingetragene Stickstoffmenge ca. 20 bis 45 kg/h.

Der überschüssige Wasserdampf/Stickstoff-Teil wird ausgeschleust und der Wasserdampfteil in einem Wasserstrahlventilator niedergeschlagen.

**Patentansprüche**

1. Verfahren zur Herstellung von pulverförmigen wasserlöslichen Cellulosederivaten, ausgewählt aus der Gruppe bestehend aus Methylhydroxyethylcellulose und Methylhydroxypropylhydroxyethylcellulose, **dadurch gekennzeichnet, dass**

   a) ein aus der Reaktion von Cellulose mit einem Alkylierungs- oder Hydroxyalkylierungsmittel erhaltener Filterkuchen aus Cellulosederivat mit einem Wassergehalt von 40 bis 60 Gew.% eingesetzt wird und in insgesamt 65 bis 78 Gew.-% Wasser, bezogen auf das Gesamtgewicht, gequollen oder gelöst wird und anschließend
   b) in einer sieblosen Hochdrehzahl-Prallmühle durch ein Wärmeträger- und Transportgas das Wasser, das sich im gequollenen oder gelösten Cellulosederivat befindet, in die Dampfphase und das gelöste oder gequollene Cellulosederivat in den Festkörperzustand in Form feinteiliger Partikel überführt wird,
   c) die Partikel vom Wärmeträger- und Transportgas abgetrennt werden und
   d) die abgetrennten Partikel gegebenenfalls getrocknet werden.

2. Verfahren nach Anspruch 1, **dadurch gekennzeichnet, dass** dem Cellulosederivat vor, während oder nach einem oder mehreren der Teilschritte a) bis c) Modifikatoren, Additive und/oder Wirkstoffe zugegeben werden.

3. Verfahren nach einem der Ansprüche 1 oder 2, **dadurch gekennzeichnet, dass** das Cellulosederivat Methylhydroxyethylcellulose mit einem DS (M) von 1 bis 2,6 und einem MS (HE) von 0,05 bis 0,9 ist.

4. Verfahren nach einem der Ansprüche 1 oder 2, **dadurch gekennzeichnet, dass** das Cellulosederivat Methylhydroxypropylhydroxyethylcellulose mit einem DS (M) von 1 bis 2,6 und einem MS (HP) von 0,05 bis 1,2 und einem MS (HE) von 0,05 bis 0,9 ist.

**5.** Verfahren nach einem der Ansprüche 1 bis 4, **dadurch gekennzeichnet, dass** das Schüttgewicht des Cellulosederivatproduktes durch die Menge des zur Quellung oder Lösung eingesetzten Wassers eingestellt wird.

**6.** Verfahren nach einem der Ansprüche 1 bis 5, **dadurch gekennzeichnet, dass** das zur Quellung oder Lösung eingesetzte Wasser oder das Cellulosederivat bzw. das Gel gekühlt wird.

**7.** Verfahren nach einem der Ansprüche 1 bis 6, **dadurch gekennzeichnet, dass** das Transport- und Wärmeträgergas Luft oder Wasserdampf oder ein Wasserdampf/Luft-Gemisch ist.

## Claims

**1.** Process for producing pulverulent water-soluble cellulose derivatives selected from the group consisting of methylhydroxyethylcellulose and methylhydroxypropylhydroxyethylcellulose, **characterized in that**

a) a cellulose derivative filtercake obtained from the reaction of cellulose with an alkylating or hydroxyalkylating agent and having a water content of 40 wt. % to 60 wt. % is used and swelled or dissolved in a total of 65 wt. % to 78 wt. % water, based on the total weight, and subsequently

b) the water in the swelled or dissolved cellulose derivative is converted into the vapour phase in a sieveless high rotational speed impact mill by means of a heat transfer and transporting gas and the dissolved or swelled cellulose derivative is converted into the solid state in the form of finely divided particles,

c) the particles are separated from the heat transfer and transporting gas, and

d) the separated-off particles are dried, if appropriate.

**2.** Process according to Claim 1, **characterized in that** modifiers, additives and/or actives are added to the cellulose derivative before, during or after one or more of steps a) to c).

**3.** Process according to Claim 1 or Claim 2, **characterized in that** the cellulose derivative is methylhydroxyethylcellulose having a DS (M) of 1 to 2.6 and an MS (HE) of 0.05 to 0.9.

**4.** Process according to Claim 1 or Claim 2, **characterized in that** the cellulose derivative is methylhydroxypropylhydroxyethylcellulose having a DS (M) of 1 to 2.6 and an MS (HP) of 0.05 to 1.2 and an MS (HE) of 0.05 to 0.9.

**5.** Process according to any one of Claims 1 to 4, **characterized in that** the bulk density of the cellulose derivative product is adjusted by the amount of water used for swelling or dissolving.

**6.** Process according to any one of Claims 1 to 5, **characterized in that** the water used for swelling or dissolving or the cellulose derivative or the gel is cooled.

**7.** Process according to any one of Claims 1 to 6, **characterized in that** the transporting and heat transfer gas is air or water vapour or a water vapour-air mixture.

## Revendications

**1.** Procédé de préparation de dérivés de cellulose solubles dans l'eau sous forme poudreuse, sélectionnés parmi le groupe constitué de la méthylhydroxyéthylcellulose et de la méthylhydroxypropylhydroxyéthylcellulose, **caractérisé en ce que**

a) un gâteau de filtration de dérivé de cellulose présentant une teneur en eau comprise entre 40 et 60 % en poids, obtenu en faisant réagir de la cellulose avec un agent d'alkylation ou d'hydroxyalkylation, est mis en oeuvre et gonflé ou dissous dans 65 à 78 % en poids d'eau au total (par rapport au poids total), et ensuite

b) l'eau qui se trouve dans le dérivé de cellulose gonflé ou dissous est convertie en phase vapeur dans un broyeur centrifuge à vitesse élevée non perforé par un gaz caloporteur et transporteur et le dérivé de cellulose dissous ou gonflé est converti à l'état solide, sous la forme de fines particules,

c) les particules sont séparées du gaz caloporteur et transporteur et

d) les particules séparées sont éventuellement séchées.

**2.** Procédé selon la revendication 1, **caractérisé en ce que** des modificateurs, des additifs et/ou des substances actives sont additionnés au dérivé de cellulose avant, pendant ou après une ou plusieurs des étapes partielles a) à c).

**3.** Procédé selon une des revendications 1 ou 2, **caractérisé en ce que** le dérivé de cellulose est une méthylhydroxyéthylcellulose présentant un DS (M) de 1 à 2,6 et une MS (HE) de 0,05 à 0,9.

**4.** Procédé selon une des revendications 1 ou 2, **caractérisé en ce que** le dérivé de cellulose est une méthylhydroxypropylhydroxyéthylcellulose présentant un DS (M) de 1 à 2,6, ainsi qu'une MS (HP) de 0,05 à 1,2 et une MS (HE) de 0,05 à 0,9.

**5.** Procédé selon une des revendications 1 à 4, **caractérisé en ce que** la densité en vrac du produit de dérivé de cellulose est ajustée par le volume de l'eau utilisée pour le gonflement ou la solution.

**6.** Procédé selon une des revendications 1 à 5, **caractérisé en ce que** l'eau utilisée pour le gonflement ou la solution ou le dérivé de cellulose ou le gel est refroidi(e).

**7.** Procédé selon une des revendications 1 à 6, **caractérisé en ce que** le gaz transporteur et caloporteur est de l'air ou de la vapeur d'eau ou un mélange d'air et de vapeur d'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2331864 A
- GB 804306 A
- DE 952264 A
- EP 0049815 A
- US 4415124 A
- DE 3032778 A
- EP 0370447 A
- EP 0384046 A
- WO 960074 A
- EP 0835881 A
- EP 0835882 A
- US 4044198 A
- GB 2262527 A
- WO 9831710 A
- US 4747550 A
- DE 3811910 A
- EP 0775526 A

**In der Beschreibung aufgeführte Nicht-Patentliteratur**

- Ullmann's Encyclopedia of Industrial Chemistry. VCH Verlagsgesellschaft, 1986, vol. A5, 461-488
- Methoden der organischen Chemie. Makromolekulare Stoffe. Georg Thieme Verlag Stuttgart, 1987, vol. E20, 2048-2076
- **G. BARTELMUS ; R. KETTERER.** *Z. Anal. Chem.,* 1977, vol. 286, 161-190